Europäisches Patentamt

European Patent Office

Office européen des brevets

(11) Numéro de publication: **0 346 163**
**A1**

## (12) DEMANDE DE BREVET EUROPEEN

(21) Numéro de dépôt: **89400838.2**

(22) Date de dépôt: **24.03.89**

(51) Int. Cl.⁴: **F 16 L 23/00**

(30) Priorité: **08.06.88 FR 8804721**

(43) Date de publication de la demande:
**13.12.89 Bulletin 89/50**

(84) Etats contractants désignés:
**AT BE CH DE ES FR GB GR IT LI LU NL SE**

(71) Demandeur: **C.G.M.I. COMPOSANTS GAZ POUR LA MICRO ELECTRONIQUE INTERNATIONALE**
**8 Rue des Artisans**
**F-78760 Jouars Pontchartrain (FR)**

(72) Inventeur: **Dugast, Joseph**
**1, rue de l'Abreuvoir**
**F-28260 Rouvres (FR)**

**De Praetere, Raymond**
**1, rue des Coquelicots**
**F-91000 Evry (FR)**

**Sabatier, André**
**83, avenue Kennedy**
**F-94190 Villeneuve Saint Georges (FR)**

(74) Mandataire: **Thibon-Littaye, Annick**
**Cabinet A. THIBON-LITTAYE 11 rue de l'Etang**
**F-78160 Marly-le-Roi (FR)**

(54) **Raccord d'assemblage de canalisations notamment pour gaz.**

(57) La présente invention concerne un raccord d'assemblage de canalisations, notamment pour gaz, comportant deux embouts munis chacun à l'une de leurs extrémités d'un embout de raccordement. Le raccord d'assemblage comporte une bague (4) maintenant dans le prolongement l'un de l'autre les deux embouts sur un même axe dans une première étape de montage. Il comporte un joint spécial 3 et deux demi-coquilles (6,7) à mettre en oeuvre dans une seconde étape de montage pour assurer un blocage longitudinal.

Application pour un raccord à ultra-vide ou à haute pression.

FIG.1

EP 0 346 163 A1

**Description**

## RACCORD D'ASSEMBLAGE DE CANALISATIONS NOTAMMENT POUR GAZ

La présente invention concerne le domaine des raccords d'assemblage de canalisations, notamment pour gaz de haute pureté, comportant deux embouts formant chacun une extrémité de raccordement, permettant d'assurer une liaison étanche entre deux canalisations. Elle a plus particulièrement pour objet les différents éléments qui coopèrent avec les deux embouts à raccorder de manière à assurer une étanchéité parfaite entre eux tout en réalisant un montage simple et peu encombrant.

Les dispositifs de raccord de canalisations les plus usuels jusqu'à présent comportent essentiellement une pièce mâle engagée autour d'un embout de liaison à une première canalisation et une pièce femelle engagée sur un embout de liaison à une deuxième canalisation, les deux pièces montées coopérant ensemble par une action de vissage de l'une sur l'autre afin d'assurer un blocage étanche des canalisations par l'intermédiaire d'un joint d'étanchéité.

De tels dispositifs à pièce mâle et pièce femelle ont l'inconvénient d'impliquer, lors du blocage par vissage, une torsion des deux embouts l'un par rapport à l'autre ainsi qu'un montage peu aisé, puisqu' il faut emboîter dans une première étape les pièces males et femelles sur les embouts. Cette conception gêne notamment les soudures d'embouts courts sur les canalisations. De plus, la pièce mâle, venant s'engager par une action de vissage à l'intérieur de la pièce femelle, implique un encombrement du raccord pouvant nuire à une utilisation dans des lieux difficiles d'accès. Enfin, le mode de montage entraîne un risque de dégagement de particules important, qui perturbe l'environnement de propreté souvent exigé dans les installations traitant des gaz à haute pureté.

Pour réaliser des raccords d'assemblage permettant de s'affranchir des inconvénients précédemment cités, notamment des difficultés de montage ainsi que des encombrements importants. Il convient de permettre un serrage positif du joint d'étanchéité, par appui axial précis sans couple de torsion, ainsi que de supprimer le besoin de deux types d'embouts différents (mâles et femelles) et réduire par là le nombre des combinaisons de pièces à mettre en oeuvre pour réaliser l'ensemble des raccords d'une installation industrielle complète.

On peut alors envisager des raccords tels que celui qui est décrit dans le document DE-C-835 090, en faisant appel à deux demi-coquilles extérieures aux embouts qui serrent les embouts l'un contre l'autre sans aucune rotation et qui, par leur blocage longitudinal, évite tout débattement latéral et longitudinal. Ce document propose en outre d'interposer une bague intermédiaire entre les demi-coquilles et les embouts à leurs extrémités.

Néanmoins, les raccords conçus conformément à ce document restent encore bien imparfaits, surtout en regard des exigences de précision des installations transportant des gaz à haute pureté. L'étanchéité est insuffisante s'il n'est pas prévu d'écraser un joint entre les faces d'extrémité des embouts, alors qu'un joint classique ne vient jamais en correspondance précise avec la surface interne des embouts délimitant le conduit axial. Soit qu'il déborde, soit qu'il reste en retrait, ceci crée des zones de stagnation qui favorisent l'encrassement.

Par ailleurs un alignement axial précis des surfaces internes des embouts n'est pas possible si la bague reste flottante à l'intérieur de la cavité de réception formée dans les demi-coquilles comme dans le document cité. Et la solution d'une bague engagée à force sur les deux embouts compliquerait le montage considérablement, pour gêner ensuite le serrage poussant les faces d'extrémité des embouts l'une vers l'autre pour assurer l'étanchéité.

La présent invention apporte des améliorations à ce type de raccord grâce notamment à la conception d'un joint spécial garantissant un passage axial sans creux ni bosse.

Conformément à l'invention, un raccord d'assemblage de canalisations, notamment pour gaz à haute pureté, comportant deux embouts présentant chacun une extrémité de raccordement, se caractérise en ce qu'il comporte un joint muni d'une partie annulaire extérieure plus mince et d'une partie annulaire intérieure plus épaisse.

Les dimensions d'un tel joint sont avantageusement choisies pour qu'un pourtour circulaire interne limitant la partie annulaire interne, corresponde à une section de passage uniforme limitée par lesdits embouts, quand ledit joint est comprimé entre les deux extrémités de raccordement serrées l'une contre l'autre.

Le raccord selon l'invention présente de préférence d'autres caractéristiques qui se combinent avec celles du joint précédent pour satisfaire au mieux aux objectifs de section de passage uniforme et d'absence de zones de stagnation d'un gaz circulant à travers le raccord.

En particulier les extrémités de raccordement des embouts se terminent avantageusement chacune par une face radiale d'extrémité plane et lisse selon une section droite du raccord.

D'autre part le raccord comporte avantageusement une bague annulaire de maintien desdites extrémités axiales dans le prolongement l'une de l'autre et il est alors profitable que le joint est dimensionné par le pourtour extérieur de la partie annulaire extérieure en rapport avec ladite bague, de manière que cette dernière assure le positionnement radial du joint entre les faces terminales des extrémités d'embout pendant le serrage de ces extrémités l'une vers l'autre.

Selon une autre caractéristique de l'invention, le raccord comporte un moyen de serrage des deux embouts l'un vers l'autre, constitué par deux demi-coquilles, solidarisables entre elles pour assurer un blocage longitudinal des deux embouts, et ceci de préférence de manière distincte d'une action de positionnement radial des deux embouts, dans le prolongement axial l'un de l'autre qui peut être assuré par la bague de maintien mentionnée ci-dessus.

Il doit être entendu cependant qu'on pourrait également utiliser, de manière équivalente, plus de deux demi-coquilles, pour constituer une coquille annulaire complète enserrant l'ensemble.

Selon une caractéristique secondaire de l'invention chaque demi-coquille comporte un chanfrein intérieur coopérant avec la forme de l'extrémité des embouts pour réaliser un centrage de ladite coquille sur l'axe, en même temps qu'un serrage longitudinal des embouts selon l'axe.

Avantageusement la bague de maintien comporte une ouverture d'élasticité circonférencielle qui facilite son positionnement exact autour des extrémités d'embouts, en contact étroit avec elles et sous pression.

Selon une autre caractéristique secondaire de l'invention, le raccord d'assemblage comporte des moyens de blocage des deux demi-coquilles l'une par rapport à l'autre, lesdits moyens de blocage assurant le serrage longitudinal des embouts contre le joint d'étanchéité tandis que ce dernier est maintenu centré sur l'axe avec les embouts par la bague.

Enfin, avantageusement, au moins une des coquilles comporte un conduit de détection de fuite de gaz.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

    - la figure 1 représente les différents éléments constitutifs d'un raccord d'assemblage selon l'invention en vue éclatée;

    - la figure 2 représente une vue en coupe longitudinale du raccord d'assemblage monté.

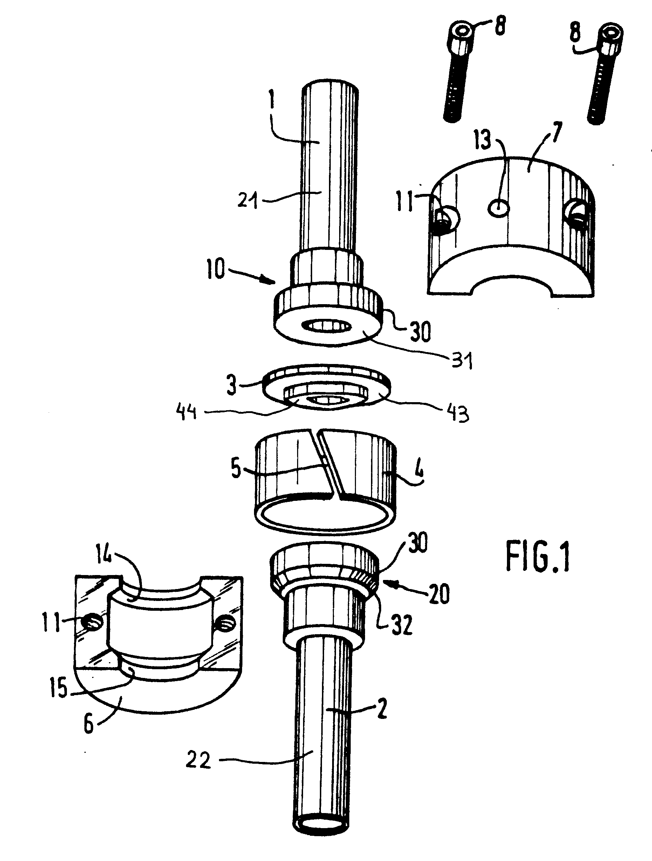

La figure 1 illustre le raccord d'assemblage muni de ses divers éléments constitutifs en vue éclatée. Deux embouts 1,2 présentent une partie tubulaire 21,22 à souder respectivement sur deux canalisations à raccorder, terminée par une extrémité de raccordement 10,20 ; leur forme est telle que habituellement réalisée dans les dispositifs existant actuellement. Chaque extrémité de raccordement 10,20 se termine selon un plan de section droite, par face terminale radiale 31, qui est plane et lisse et perpendiculaire à l'axe du raccord.

Les deux extrémités terminales 10,20 appartenant respectivement aux embouts 1 et 2 sont identiques et leurs faces terminales respectives peuvent se placer en vis-à-vis l'une de l'autre en enserrant entre elles un joint d'étanchéité 3, constitué par une pièce métallique en forme de rondelle. Le diamètre extérieur du joint correspond précisément à celui des couronnes 30, et le diamètre intérieur d'ouverture de son orifice central est tel qu'il corresponde pratiquement au diamètre de la canalisation intérieure des embouts tubulaires 1 et 2, du moins quand le joint est effectivement comprimé entre les deux faces terminales.

Le système de raccord selon la présente invention comporte par ailleurs une bague annulaire 4 dont la longueur axiale est pratiquement le double de celle de la couronne d'appui 30 d'un embout, ou légèrement inférieure. Le diamètre intérieur de cette bague annulaire est choisi de manière à permettre une insertion sans jeu de chaque extrémité d'embout 10,20, de part et d'autre du joint d'étanchéité 3. Pour faciliter cette insertion tout en permettant un serrage par pression ou contact étroit sur les couronnes, elle est fendue pour former une fente d'élasticité 5, orientée en biais par rapport à son axe longitudinal. Cette bague annulaire assure le positionnement des éléments du système d'étanchéité, c'est-à-dire les extrémités des deux embouts à raccorder et le joint d'étanchéité placé entre les couronnes d'extrémité, en les maintenant ensemble centrés sur l'axe du raccord.

La première étape de montage consiste à placer le joint d'étanchéité 3 axialement à l'intérieur de la bague 4 tout en engageant de chaque côté les extrémités 10,20 des embouts 1,2 à raccorder, jusqu'à ce qu'elles soient en contact avec ledit joint. Lorsque les embouts sont dans cette position de contact, la bague annulaire assure un positionnement radial dans le prolongement l'un de l'autre des deux embouts, centrés sur le même axe que le joint interposé entre eux, en s'opposant à tout déplacement latéral par rapport à cet axe de référence mais en permettant un déplacement longitudinal selon ce même axe. L'avantage apporté est de permettre à l'utilisateur, en maintenant d'une main la bague annulaire, de pouvoir engager facilement l'embout à raccorder en le faisant coulisser en translation, sans rotation. Une fois les embouts engagés à l'intérieur de cette bague, une prise par une seule main permet de maintenir l'ensemble, laissant libre ainsi l'autre main pour procéder à l'étape de blocage de l'ensemble.

La seconde étape de montage est constituée par la mise en place de deux demi-coquilles 6,7 recouvrant la bague de maintien 4 en liaison coulissante avec les embouts. Chaque demi-coquille 6,7 comporte intérieurement l'empreinte du demi-volume de la bague annulaire de maintien 4 entre deux chanfreins 14,15 conformés pour coopérer avec des portées tronconiques 32,33 de la couronne 30 de chaque extrémité 10,20 des embouts à raccorder 1,2. Les deux demi-coquilles se terminent par une face plane dans un plan diamétral pour pouvoir être accolées l'une contre l'autre.

Les embouts 10,20 étant engagés dans la bague, on présente les deux demi-coquilles radialement opposées face à face en recouvrant la bague annulaire 4 et les couronnes 30 des deux embouts de chaque côté de leur pourtour circulaire. Il convient alors de rapprocher les deux demi-coquilles l'une vers l'autre en enserrant la bague et les couronnes. Par ce rapprochement radial, on provoque simultanément, grâce à la coopération des chanfreins 14,15 avec les portées 32,33, le rapprochement des deux embouts l'un vers l'autre dans le sens axial, et par là même le serrage du joint d'étanchéité entre eux et le blocage longitudinal de l'ensemble. A cet effet, chaque demi-coquille 6,7 est munie d'orifices latéraux la traversant transversalement de manière à pouvoir engager des vis de solidarisation 8. Ces vis traversent par ces orifices la première demi-coquille et elles se vissent dans les orifices de la deuxième demi-coquille qui sont taraudés.

L'utilisation de ces deux demi-coquilles en coopération avec une bague annulaire de maintien permet le montage en raccordement des deux embouts sans impliquer aucun système de serrage rotatif de torsion. De plus, pendant le serrage positif obtenu par le rapprochement des deux demi-coquilles, le joint et les extrémités des embouts restent centrés sur l'axe et exactement positionnés grâce à la présence de la bague annulaire 4. Par contre, la liaison des deux demi-coquilles entre elles pourrait être réalisée par des moyens équivalents aux vis ci-dessus, notamment par une charnière reliant les extrémités de deux demi-coquilles latéralement et un système de goupille tournante venant s'engager dans une encoche réalisée latéralement dans une demi-coquille. On conserverait le même avantage que ci-dessus, à savoir que l'on met en place les demi-coquilles latéralement sur le raccord préparé, sans avoir à engager la moindre pièce par avance autour des embouts, en blocage longitudinal, de telle sorte que la réalisation du raccord peut s'effectuer souvent sur des embouts déjà soudés aux extrémités de leurs canalisations respectives.

On rappellera ici, en se référant à la figure 1, que la bague annulaire de maintien 4 est fendue de l'une a l'autre de ses faces radiales d'extrémité pour former une fente 5 lui conférant une élasticité qui permet de pallier tous les phénomènes de dilatation en cours d'utilisation, qui procure un effet de serrage complémentaire sur le joint dans le sens radial, comme on le verra plus loin, et qui permet aussi de bloquer la bague également en rotation, dans la seconde étape de montage. Par ailleurs, l'une des demi-coquilles est munie d'un conduit de détection de fuite de gaz 13 (visible sur la figure 1), les fuites dues à une défaillance du joint 3 pouvant s'échapper par l'ouverture 5 de la bague 4.

Conformément à l'invention, le joint 3, qui est un joint métallique, présente une forme spéciale par laquelle il assure séparément d'une part la coopération longitudinale avec les extrémités d'embouts entre la surface radiale lisse d'un premier embout et celle d'un second embout à raccorder, quand elles sont rapprochées l'une vers l'autre sous l'effet des demi-coquilles, d'autre part la coopération avec la bague 4 pour maintenir un positionnement précis dans l'axe du raccord tout au long des opérations de montage, puis en cours d'utilisation en évitant toute incidence des phénomènes de dilatation.

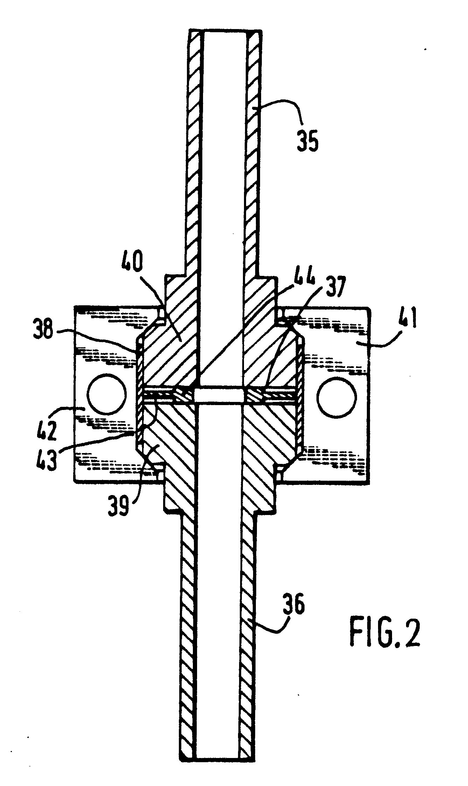

On remarque ainsi, à l'examen des figures 1 et 2, que le joint 3 comporte en une seule pièce deux parties annulaires d'épaisseurs différentes. Alors que dans sa partie médiane, il s'étend sur toute la section annulaire des extrémités d'embout, on distingue une partie annulaire extérieure 43, relativement mince. C'est elle qui coopère sur son pourtour avec la bague 4. Du côté interne du raccord, le joint est plus épais dans sa partie intérieure 44, dépassant de chaque côté de la partie extérieure 43 par rapport au plan médian. C'est là qu'est assurée l'étanchéité à proximité immédiate du conduit axial du raccord, par appui sur une surface relativement faible des faces radiales d'extrémité des deux embouts lors du serrage axial qui comprime élastiquement le joint, sélectivement dans sa partie intérieure relativement épaisse. Le conduit axial est ainsi continu, avec une section de passage uniforme tout au long du raccord.

Comme l'effort de serrage axial ne s'exerce pas sur la partie annulaire externe 43, il n'y a pas interférence avec le rôle propre de celle-ci. De même, lors du positionnement radial sur l'axe du raccord, le joint reste sensiblement rigide et exactement en place, cependant que la bague 4 assure sur le pourtour de la partie extérieure 43 un effort de serrage élastique dans le sens radial.

Les raccords tels que décrits ci-dessus peuvent trouver des applications dans les installations de canalisations véhiculant des gaz et des fluides. Dans le domaine des gaz, la présente invention s'applique particulièrement aux systèmes à haute pression ou basse pression, tous les avantages de la présente invention se retrouvant dans le cas d'utilisation sous vide.

## Revendications

1. Raccord d'assemblage de canalisations notamment pour gaz à haute pureté, comportant deux embouts (1,2) présentant chacun une extrémité de raccordement (10,20), caractérisé en ce qu'il comporte un joint (3) muni d'une partie annulaire extérieure (43) plus mince et d'une partie annulaire intérieure plus épaisse.

2. Raccord d'assemblage selon la revendication 1, caractérisé en ce que les dimensions dudit joint (3) sont choisies pour qu'un pourtour circulaire interne limitant ladite partie annulaire interne, corresponde à une section de passage uniforme limitée par lesdits embouts (1,2), quand ledit joint est comprimé entre les deux extrémités de raccordement serrées l'une contre l'autre.

3. Raccord d'assemblage selon la revendication 1 ou 2, caractérisé en ce que les extrémités de raccordement des embouts se terminent chacune par une face radiale d'extrémité plane et lisse selon une section droite du raccord.

4. Raccord d'assemblage selon l'une quelconque des revendications 1 à 3, caractérisé en ce que le raccord comporte une bague annulaire (4) de maintien desdites extrémités axiales dans le prolongement l'une de l'autre.

5. Raccord d'assemblage selon la revendication 4, caractérisé en ce que la bague de maintien est dimensionnée pour être en contact étroit avec lesdites extrémités et en ce qu'elle comporte une ouverture d'élasticité circonférencielle.

6. Raccord d'assemblage selon la revendication 4 ou 5, caractérisé en ce que le joint est dimensionné par le pourtour extérieur de la partie annulaire extérieure en rapport avec ladite bague, de manière que cette dernière assure le positionnement radial du joint entre les faces terminales des extrémités d'embout pendant le serrage de ses extrémités l'une vers l'autre.

7. Raccord d'assemblage selon l'une quelconque des revendications 1 à 6, caractérisé en ce que le raccord comporte un moyen de serrage des deux embouts l'un vers l'autre, constitué par deux demi-coquilles (6,7), solidarisables entre elles pour assurer un blocage longitudinal des deux embouts.

8. Raccord d'assemblage selon la revendication 7, caractérisé en ce que chaque demi-coquille comporte un chanfrein intérieur coopérant avec la forme de l'extrémité des embouts pour réaliser un centrage de ladite coquille sur l'axe, en même temps qu'un serrage longitudinal des embouts selon l'axe.

9. Raccord d'assemblage selon la revendication 7 ou 8, caractérisé en ce que le raccord d'assemblage comporte des moyens de blocage (8) des deux demi-coquilles l'une par rapport à l'autre, lesdits moyens de blocage assurant le serrage des extrémités d'embouts (10,20) contre le joint d'étanchéité (3), maintenu centré sur l'axe par la bague de maintien.

10. Raccord d'assemblage selon l'une quelconque des revendications 6 à 9, caractérisé en ce qu'au moins une des coquilles comporte un conduit (13) de détection de fuite de gaz.

EP 0 346 163 A1

FIG.1

FIG.2

Office européen
des brevets

**RAPPORT DE RECHERCHE EUROPEENNE**

Numero de la demande

EP  89 40 0838

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 142 871  (DE BOKS)<br>* Figures *<br>--- | 1-3 | F 16 L  23/00 |
| X | DE-A-3 418 439  (BARTOS)<br>* Figures *<br>--- | 1 | |
| A,D | DE-C-  835 090  (HARZER)<br>* Figures; page 2, lignes 40-63 *<br>----- | 1,4,5,7<br>-9 | |

|  |
|---|
| DOMAINES TECHNIQUES RECHERCHES (Int. Cl.4) |
| F 16 L |

Le présent rapport a été établi pour toutes les revendications

| Lieu de la recherche | Date d'achèvement de la recherche | Examinateur |
|---|---|---|
| LA HAYE | 08-09-1989 | HUBEAU M.G. |

EPO FORM 1503 03.82 (P0402)